# EUROPÄISCHE PATENTSCHRIFT

(11) **EP 2 182 211 B1**
(45) Veröffentlichungstag und Bekanntmachung des Hinweises auf die Patenterteilung: **12.11.2014**
(21) Anmeldenummer: 09169899.3
(22) Anmeldetag: 10.09.2009
(51) Int. Cl.: F04B 1/04, F04B 1/053, F04B 9/04, F02M 59/10

(54) **Nockenwellentrieb mit gegen axiales Rutschen optimierten Lagerbuchsen**
Camshaft drive with bushing optimised against axial slipping
Transmission par arbre à cames dotée d'un roulement optimisé contre le glissement axial

(30) Priorität: 04.11.2008 DE 102008043429
(43) Veröffentlichungstag der Anmeldung: 05.05.2010
(73) Patentinhaber: Robert Bosch GmbH, 70442 Stuttgart (DE)
(72) Erfinder: Merz, Armin, 71384 Weinstadt (DE); Morlok, Joerg, 71287 Weissach (DE); Ginsel, Thomas, 70839 Gerlingen (DE)

(56) Entgegenhaltungen:
- DE-A1- 3 709 389
- DE-A1-102006 051 332
- DE-A1-102007 011 319
- DE-A1-102007 012 707
- DE-U1-202005 002 954
- US-A1- 2001 015 200

## Beschreibung

### Stand der Technik

Die Erfindung geht aus von einem Nockenwellentrieb nach der Gattung des Anspruchs 1.

Eine Kolbenpumpe mit einem solchen Nockenwellentrieb ist beispielsweise durch die DE 10 2006 045 933 A1 bekannt geworden. Diese bekannte Kolbenpumpe ist für eine Kraftstoffeinspritzeinrichtung einer Brennkraftmaschine vorgesehen und als Radialkolbenpumpe mit einer drehbar gelagerten Nockenwelle ausgeführt. Radial zur Nockenwelle ist ein Pumpenkolben verschiebbar geführt, der sich über eine in einem Rollenschuh drehbar gelagerte Laufrolle auf der Nockenwelle abstützt und durch eine Nockenbahn der Nockenwelle in einer Hubbewegung angetrieben wird. Der Rollenschuh ist in einen Stößelkörper eingepresst, der wiederum in einer Stößelführungsbohrung sowohl hubbeweglich geführt als auch um seine Längsachse frei drehbar gelagert ist. Die Drehung der Nockenwelle wird also mittels des aus Nockenbahn, Laufrolle, Rollenschuh und Stößelkörper bestehenden Nockenwellentriebs in eine axiale Bewegung zum Antrieb des Pumpenkolbens umgewandelt.

Die Nockenwelle ist in dem Pumpengehäuse über zwei als Lagerbuchsen ausgebildete Axiallager drehbar gelagert, wobei die Lagerbuchsen aus Stahl sind und in Bohrungen des Aluminium-Pumpengehäuses eingepresst sind. Die axialen Lagerkräfte werden mittels eines an die Lagerbuchsen angeschweißten Ringbundes abgestützt, so dass die Lagerbuchse und der Bund zusammen eine so genannte Bundbuchse ausbilden. Im Betrieb wurde allerdings eine irreversible axiale Bewegung der Bundbuchsen beobachtet, was zu einem reduzierten Axialspiel der Antriebswelle führt.

DE 10 2006 051332 A1 offenbart eine Förderpumpe mit einer Gleitlageranordnung die eine oder mehrere Lagerbuchsen aufweist. Als Gleitlagerwerkstoff kann die Lagerbuchse ein Aluminiummaterial umfassen.

DE 20 2005 001954 U1 offenbart eine Kolbenpumpe mit einem Aufnahmekörper, wobei zur Führung der Kolben Buchsen in dem Aufnahmekörper vorgesehen sind. Im Hinblick auf das Temperaturwechselverhalten offenbart diese Schrift, dass der Aufnahmekörper und die Buchse aus dem selben Werkstoff bestehen, vorzugsweise aus einem Aluminiumwerkstoff.

DE 10 2007 012707 A1 offenbart eine Hochdruckpumpe mit Nockentrieb und Nockenwelle, wobei diese durch ein Axial- und Radiallager drehbar gelagert ist. Das Axial- und Radiallager umfasst einen Anlaufkörper und eine Radiallagerbuchse, welche gemeinsam einteilig und /oder materialeinheitlich ausgebildet oder stoffschlüssig oder formschlüssig miteinander in Verbindung gebracht sind.

### Vorteile der Erfindung

Erfindungsgemäß ist im Übergangsbereich zwischen Lagerbuchse und Ringbund der Ringbund im Querschnitt reduziert, damit die Steifigkeit der Lagerbuchse durch den Ringbund möglichst nicht beeinflusst wird. Dies führt zu einer symmetrischen Pressungsverteilung des Pressverbandes und verhindert ein bei asymmetrischer Pressungsverteilung ansonsten mögliches axiales "Wandern" der Lagerbuchse.

Erfindungsgemäß weisen das Gehäuse und die darin eingepressten Lagerbuchsen den gleichen oder zumindest annähernd gleichen Längenausdehnungskoeffizienten auf. Insbesondere sind die Lagerbuchsen aus dem gleichen Material wie das Gehäuse, in das die Lagerbuchsen eingepresst werden. Während bei dem Aluminium-Gehäuse und den Stahl-Lagerbuchsen des bekannten Nockenwellentriebs infolge der unterschiedlichen Wärmeausdehnungskoeffizienten von Aluminium (α_{Aluminium} = ca. 2,3*10⁻⁵ /K bei 20°C) und Stahl (αₛₜₐₕₗ = ca. 1,4*10⁻⁵ /K bei 20°C) abhängig von der Anzahl der Temperaturwechsel und den Temperaturunterschieden eine irreversible axiale Bewegung der Lagerbuchsen auftreten kann, ist erfindungsgemäß diese Ursache für eine axiale Bewegung der Lagerbuchsen aufgrund der gleichen oder zumindest annähernd gleichen Längenausdehnungskoeffizienten ausgeschlossen.

Aluminium-Lagerbuchsen, die in ein Aluminium-Gehäuse eingepresst sind, haben gegenüber Stahl-Lagerbuchsen folgende weitere Vorteile:
- Keine Fugendruckminimierungen/-erhöhungen im Pressverband durch Temperatureinfluss. Das Pressmaß und damit die erzeugte Pressungsverteilung im Pressverband bleiben selbst unter Temperatureinfluss konstant. Das Pressmaß kann so generell klein gewählt werden.
- Geringeres Gewicht der Aluminium-Lagerbuchsen
- Aufgrund des wesentlich kleineren E-Modul von Aluminium ist die Aluminium-Lagerbuchse somit überschlägig dreimal nachgiebiger als die Stahl-Lagerbuchse, was die Pressung der Aluminium-Lagerbuchse entlang axialer Betrachtung des Pressverbandes gegenüber einer Stahlbuchse symmetrischer verteilt.

Weitere Vorteile und vorteilhafte Ausgestaltungen des Gegenstands der Erfindung sind der Beschreibung, der Zeichnung und den Ansprüchen entnehmbar.

### Zeichnungen

Ein Ausführungsbeispiel des erfindungsgemäßen Gegenstands ist in den Zeichnungen dargestellt und in der nachfolgenden Beschreibung näher erläutert. Es zeigen:
- Fig. 1: einen Längsschnitt eines Ausführungsbeispiels der erfindungsgemäßen Kolbenpumpe bzw. des erfindungsgemäßen Nockenwellenantriebs;
- Fig. 2: eine Detailansicht eines in Fig. 1 gezeigten Axiallagers gemäß II in Fig. 1;
- Fig. 3: eine Ansicht des Axiallagers gemäß III-III in Fig. 2;
- Fig. 4: schematisch die Pressung (Fugendruck) P zwischen Lagerbuchse und Gehäuse in axialer Richtung x bei erfindungsgemäßer symmetrischer Pressung (durchgezogene Kurve a) und bei asymmetrischer Pressung (gestrichelte Kurve b); und
- Fig. 5: Ein Beispiel einer Kolbenpumpe bzw. eines Nockenwellentriebs in einer Darstellung analog zu Fig. 2.

### Beschreibung des Ausführungsbeispiels

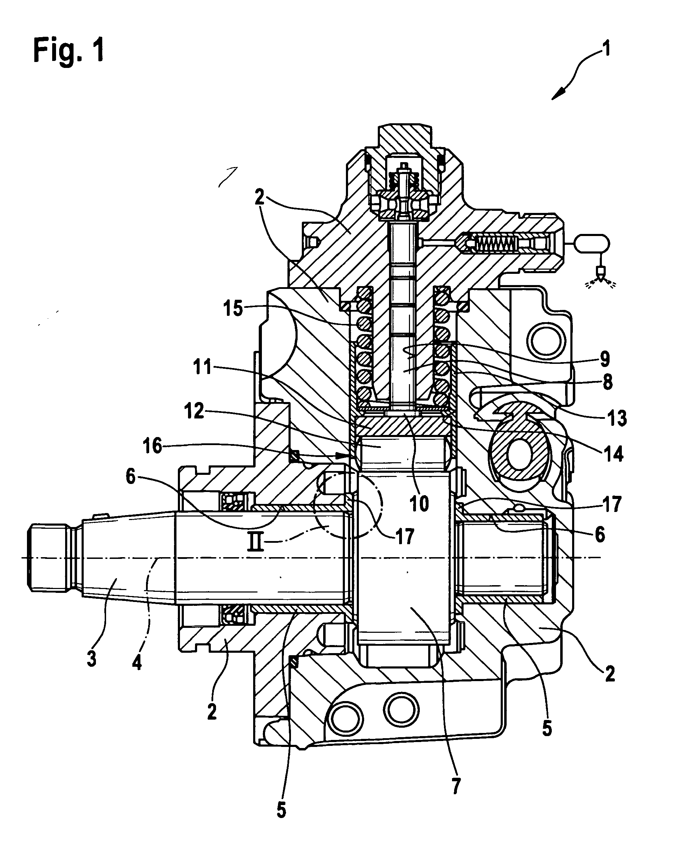

In **Fig. 1** ist eine Hochdruckpumpe **1** für eine Kraftstoffeinspritzeinrichtung einer Brennkraftmaschine beispielsweise eines Kraftfahrzeugs dargestellt. Durch die Hochdruckpumpe 1 wird dabei Kraftstoff unter Hochdruck von bis zu 2000 bar gefördert, beispielsweise in einen Speicher, aus dem Kraftstoff zur Einspritzung an der Brennkraftmaschine entnommen wird.

Die Hochdruckpumpe **1** ist als Radialkolbenpumpe ausgebildet und weist ein mehrteiliges Pumpengehäuse **2** auf, in dem eine Antriebswelle **3** um eine Achse **4** in zwei als Lagerbuchsen **5** ausgebildeten Axiallagern drehbar gelagert ist. Die Lagerbuchsen 5 sind in entsprechende Bohrungen **6** des Gehäuses 2 eingepresst. Die Antriebswelle 3 weist zwischen den beiden Lagerbuchsen 5 eine Nockenbahn **7** auf, die einen Pumpenkolben 8 in einer Hubbewegung antreibt. Der Pumpkolben 8 ist im Pumpengehäuse 2 in einer radial zur Drehachse 4 der Antriebswelle 3 verlaufenden Zylinderbohrung **9** verschiebbar dicht geführt und stützt sich mit einem Kolbenfuß **10** über eine in einem Rollenschuh **11** drehbar gelagerte Laufrolle **12** an der Nockenbahn 7 ab. Der Rollenschuh 11 ist wiederum in einen Stößelkörper **13** eingepresst, der in einer Stößelführungsbohrung **14** des Pumpengehäuses 2 hubbeweglich geführt und um seine Längsachse frei drehbar gelagert ist. Eine Druckfeder **15** drückt über den Stößelkörper 13 sowie den Rollenschuh 11 die Laufrolle 12 gegen die Antriebswelle 3, wodurch die Laufrolle 12 in Anlage an der Nockenbahn 7 gehalten ist. Der durch die Nockenbahn 7, die Laufrolle 12, den Rollenschuh 11 und den Stößelkörper 13 gebildete Nockentrieb ist insgesamt mit **16** bezeichnet.

Zumindest diejenigen Teile des Gehäuses 2, in denen die Bohrungen 6 ausgebildet sind, und die Lagerbuchsen 5 sind aus dem gleichen Material (z.B. Aluminium) gebildet und weisen somit den gleichen Längenausdehnungskoeffizienten auf. Folglich ist eine von der Anzahl der Temperaturwechsel und den Temperaturunterschieden abhängige axiale Bewegung der Lagerbuchsen 5 relativ zum Gehäuse 2 ausgeschlossen.

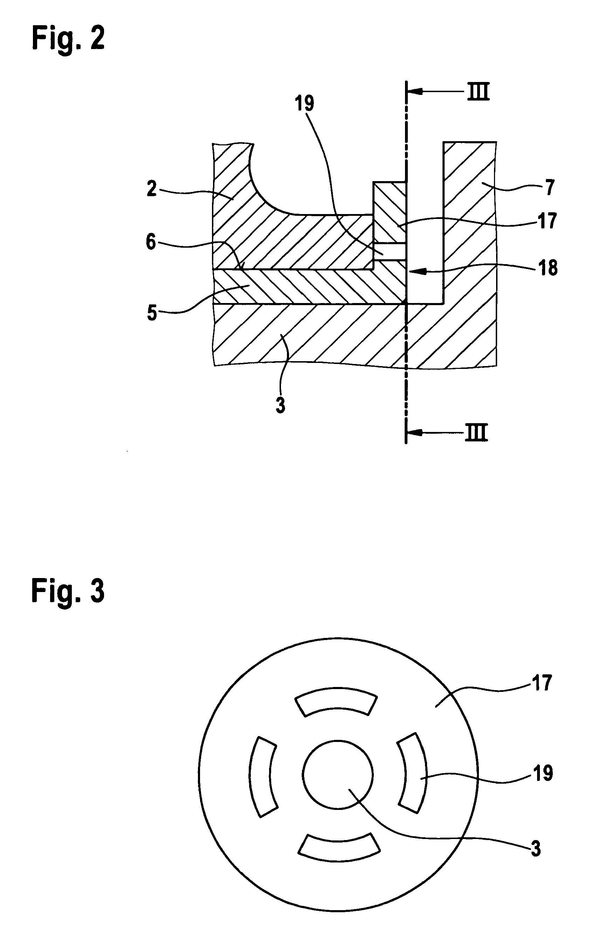

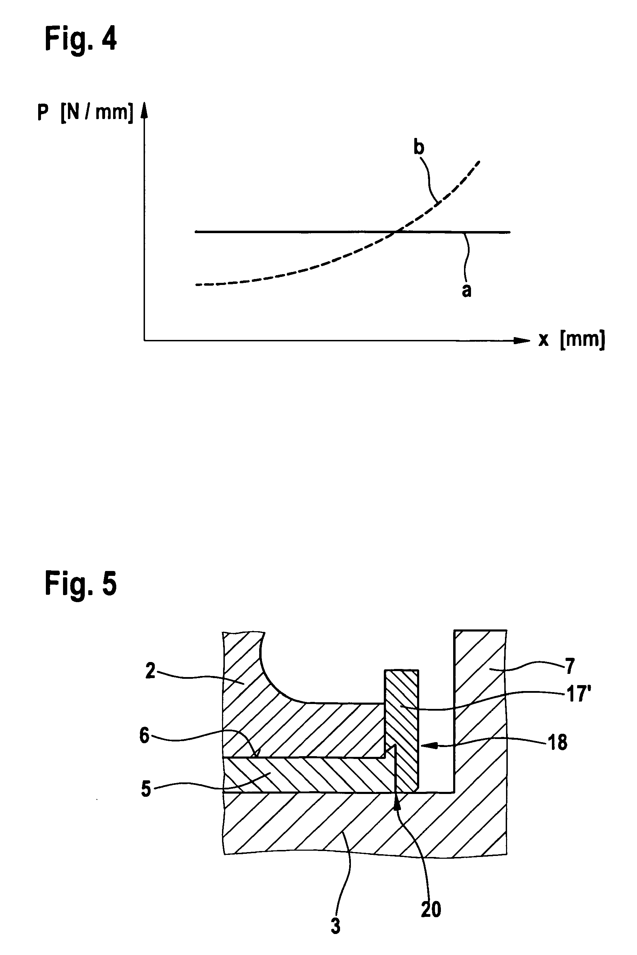

Wie in **Fign. 2 und 3** im Detail gezeigt, weisen die Lagerbuchsen 5 an ihrem nockenbahnseitigen Ende jeweils einen radial nach außen vorstehenden Ringbund **17** auf, der eine axiale Anlauffläche für die Nockenbahn 7 bildet. Der Ringbund 17 ist mit der Lagerbuchse 5 stoffschlüssig verbunden, und zwar entweder einstückig mit der Lagerbuchse 5 hergestellt oder nachträglich z.B. durch Schweißen an die Lagerbuchse 5 angebunden. Mit anderen Worten bilden die Lagerbuchse 5 und der Ringbund 17 zusammen eine so genannte Bundbuchse **18** aus. Im Übergangsbereich zwischen Lagerbuchse 5 und Ringbund 17 ist der Ringbund 17 durch vier in Umfangsrichtung gleichmäßig verteilte Aussparungen bzw. Durchbrüche **19** im Querschnitt reduziert, damit die Steifigkeit der Lagerbuchse 5 durch den Ringbund 17 möglichst nicht beeinflusst wird. Dies führt zu der in **Fig. 4** gezeigten symmetrischen Pressungsverteilung (durchgezogene Kurve a) entlang axialer Betrachtung (x-Richtung) des Pressverbandes und verhindert ein bei asymmetrischer Pressungsverteilung (gestrichelte Kurve b) ansonsten mögliches axiales "Wandern" der Lagerbuchse 5. Statt durch die mehreren Durchbrüche 19 kann der Querschnitt des Ringbunds 17 auch durch eine Ringnut (nicht gezeigt) reduziert sein. Alternativ oder zusätzlich kann auch die Schweißnaht zwischen Ringbund 17 und Lagerbuchse 5 im Umfang ebenso reduziert werden (z.B. statt einer durchgehenden Schweißnaht vier kleine Schweißnähte, die in Umfangsrichtung äquidistant verteilt angeordnet sind).

Von der Bundbuchse 18 der Fig. 2 unterscheidet sich die in **Fig. 5** gezeigte Bundbuchse 18 dadurch, dass hier der Ringbund durch eine separate Scheibe **17'** gebildet ist, die auf die Lagerbuchse 5 aufgesteckt ist und daran über eine axial wirkende Rastverbindung **20** gehalten ist. Die Scheibe 17' ist dabei drehfest mit der Lagerbuchse 5 verbunden, z.B. mittels einer geometrischen Sicherung. Aufgrund des zwischen Lagerbuchse 5 und Scheibe 17' vorhandenen radialen Spiels wird die Steifigkeit der Lagerbuchse 5 durch die Scheibe 17' nicht beeinflusst. Dies führt zu einer symmetrischen Pressungsverteilung entlang axialer Betrachtung des Pressverbandes und verhindert ein bei asymmetrischer Pressungsverteilung ansonsten mögliches axiales "Wandern" der Lagerbuchse 5.

## Patentansprüche

1. Nockenwellentrieb (16) mit einer Antriebswelle (3), die in einem Gehäuse (2) über zwei als Lagerbuchsen (5) ausgebildete Axiallager drehbar gelagert ist und zwischen den beiden Lagerbuchsen (5) eine Nockenbahn (7) aufweist, wobei die Lagerbuchsen (5) in Bohrungen (6) des Gehäuses (2) eingepresst sind, wobei die Lagerbuchsen (5) an ihrem nockenbahnseitigen Ende jeweils einen radial nach außen vorstehenden Ringbund (17; 17') aufweisen, **dadurch gekennzeichnet, dass** das Gehäuse (2) und die darin eingepresste Lagerbuchse (5) aus Materialien gebildet sind, deren Längenausdehnungskoeffizient sich maximal um ca. 10%, vorzugsweise maximal um ca. 5%, voneinander unterscheiden, wobei im Übergangsbereich zwischen Lagerbuchse (5) und Ringbund (17) der Ringbund (17) im Querschnitt reduziert ist.

2. Nockenwellentrieb nach Anspruch 1, **dadurch gekennzeichnet, dass** der Ringbund (17) im Übergangsbereich zur Lagerbuchse (5) eine Ringnut oder mehrere in Umfangsrichtung gleichmäßig verteilt angeordnete Aussparungen oder Durchbrüche (19) aufweist.

3. Nockenwellentrieb nach Anspruch 1 oder 2, **dadurch gekennzeichnet, dass** der Ringbund (17) mit der Lagerbuchse (5) stoffschlüssig verbunden, insbesondere angeschweißt ist.

4. Nockenwellentrieb nach einem der Ansprüche 1 bis 3, **dadurch gekennzeichnet, dass** die Pressung der Lagerbuchse (5) innerhalb der Bohrung (6) des Gehäuses (2) in der axialen Richtung gleichverteilt ist.

5. Nockenwellentrieb nach Anspruch 1, **dadurch gekennzeichnet, dass** das Gehäuse (2) und die Lagerbuchsen (5) aus Materialien gebildet sind, deren Längenausdehnungskoeffizienten gleich sind.

6. Nockenwellentrieb nach Anspruch 5, **dadurch gekennzeichnet; dass** das Gehäuse (2) und die Lagerbuchsen (5) aus dem gleichen Material, insbesondere aus Aluminium, gebildet sind.

## Claims

1. Camshaft mechanism (16) having a drive shaft (3) which is mounted rotatably in a housing (2) via two axial bearings which are configured as bearing bushes (5) and has a cam track (7) between the two bearing bushes (5), the bearing bushes (5) being pressed into holes (6) of the housing (2), the bearing bushes (5) in each case having a radially outwardly projecting annular collar (17; 17') at their cam track-side end, **characterized in that** the housing (2) and the bearing bush (5) which is pressed into it are formed from materials, the coefficients of linear expansion of which differ from one another at most by approximately 10%, preferably at most by approximately 5%, the annular collar (17) being of reduced cross section in the transition region between the bearing bush (5) and the annular collar (17).

2. Camshaft mechanism according to Claim 1, **characterized in that**, in the transition region to the bearing bush (5) the annular collar (17) has an annular groove or a plurality of cut-outs or apertures (19) which are arranged distributed uniformly in the circumferential direction.

3. Camshaft mechanism according to Claim 1 or 2, **characterized in that** the annular collar (17) is connected in a material-to-material manner, in particular welded, to the bearing bush (5).

4. Camshaft mechanism according to one of Claims 1 to 3, **characterized in that** the pressing of the bearing bush (5) within the hole (6) of the housing (2) is distributed uniformly in the axial direction.

5. Camshaft mechanism according to Claim 1, **characterized in that** the housing (2) and the bearing bushes (5) are formed from materials, the coefficients of linear expansion of which are identical.

6. Camshaft mechanism according to Claim 5, **characterized in that** the housing (2) and the bearing bushes (5) are formed from the same material, in particular from aluminium.

## Revendications

1. Transmission par arbre à cames (16) avec un arbre moteur (3), qui est supporté de façon rotative dans un carter (2) au moyen de deux paliers axiaux en forme de coussinets (5) et qui présente une piste de came (7) entre les deux coussinets (5), dans laquelle les coussinets (5) sont pressés dans des alésages (6) du carter (2), dans laquelle les coussinets (5) présentent respectivement à leur extrémité côté piste de came un rebord annulaire (17; 17') saillant radialement vers l'extérieur, **caractérisée en ce que** le carter (2) et les coussinets (5) pressés dans celui-ci sont formés en des matériaux, dont les coefficients de dilatation longitudinale diffèrent l'un de l'autre au maximum d'environ 10 %, de préférence au maximum d'environ 5 %, le rebord annulaire (17) ayant une section transversale réduite dans la zone de transition entre le coussinet (5) et le rebord annulaire (17).

2. Transmission par arbre à cames selon la revendication 1, **caractérisée en ce que** le rebord annulaire (17) présente, dans la zone de transition vers le coussinet (5), une rainure annulaire ou plusieurs évidements ou passages (19) disposés en une répartition uniforme dans la direction périphérique.

3. Transmission par arbre à cames selon la revendication 1 ou 2, **caractérisée en ce que** le rebord annulaire (17) est assemblé en continuité de matière, en particulier soudé, au coussinet (5).

4. Transmission par arbre à cames selon l'une quelconque des revendications 1 à 3, **caractérisée en ce que** le pressage du coussinet (5) à l'intérieur de l'alésage (6) du carter (2) est uniformément réparti dans la direction axiale.

5. Transmission par arbre à cames selon la revendication 1, **caractérisée en ce que** le carter (2) et les coussinets (5) sont formés en des matériaux, dont les coefficients de dilatation longitudinale sont égaux.

6. Transmission par arbre à cames selon la revendication 5, **caractérisée en ce que** le carter (2) et les coussinets (5) sont formés avec le même matériau, en particulier en aluminium.
